Europäisches Patentamt

European Patent Office

Office européen des brevets

(11) Veröffentlichungsnummer: **0 197 529 B1**

(19)

# EUROPÄISCHE PATENTSCHRIFT

(12)

(45) Veröffentlichungstag der Patentschrift: **05.02.92**

(51) Int. Cl.⁵: **H04L 27/00**

(21) Anmeldenummer: **86104693.6**

(22) Anmeldetag: **07.04.86**

(54) **Verfahren für die analoge oder digitale Codierung von Information für die Verwendung bei Winkel- und Pulsmodulationsverfahren.**

(30) Priorität: **23.04.85 DE 3514664**
**13.05.85 DE 3517209**
**25.06.85 DE 3522734**

(43) Veröffentlichungstag der Anmeldung:
**15.10.86 Patentblatt 86/42**

(45) Bekanntmachung des Hinweises auf die
Patenterteilung:
**05.02.92 Patentblatt 92/06**

(84) Benannte Vertragsstaaten:
**CH FR GB IT LI NL SE**

(56) Entgegenhaltungen:
**EP-A- 0 010 731**
**EP-A- 0 110 427**
**US-A- 3 914 695**

**ICC '79, INTERNATIONAL CONFERENCE ON
COMMUNICATIONS, Band 3, Boston, 10.-14.
Juni 1979, Seiten 42.3.1-42.3.6, IEEE, New
York, US; T. AULIN et al.: "M-ary CPFSK type
of signaling with input data symbol pulse
shaping - minimum distance and spectrum"**

**TIJDSCHRIFT VAN HET NEDERLANDS
ELEKTRONICA- EN RADIOGENOOTSCHAP,**

**Band 42, Nr. 4, 1977, Seiten 87-92, Den Haag,
NL; W.A.M. SNIJDERS: "Microprocessor implementatie van datamodems"**

(73) Patentinhaber: **Dirr, Josef**
**Neufahrner Strasse 5**
**W-8000 München 80(DE)**

(72) Erfinder: **Dirr, Josef**
**Neufahrner Strasse 5**
**W-8000 München 80(DE)**

EP 0 197 529 B1

## Beschreibung

Die vorliegende Erfindung befasst sich mit einem Verfahren zur Erzeugung eines Sendesignals zur Verwendung insbesondere bei der Phasensprungtastung, bei der Pulsphasen-Pulsdauer-Pulsfrequenz- und Winkelmodulation.

Ein Hauptgebot bei der Übertragung von Information ist neben der Wirtschaftlichkeit die Sicherheit. Ein Mittel um dies zu erreichen ist der Code und das Übertragungsverfahren. Die Wirtschaftlichkeit hängt dabei hauptsächlich von der erforderlichen Bandbreite ab. So wurden zur besseren Ausnutzung der Übertragungswege mehrwertige Codierungen und zur sicheren Übertragung z.B. Phasen-Frequenz- und die Pulsmodulation verwendet. Die mehrwertigen Modulationsarten waren aus Gründen der Übertragungssicherheit und der Wirtschaftlichkeit nur bis zur 16-wertigen Phasenmodulation PSK (Phase Shift Keying) bezw. bis zur 16-wertigen Quadratur-Amplituden-Modulation QAM brauchbar. Aber auch bei diesen Codierungen waren erhebliche Bandbreiten und ein erheblicher Aufwand erforderlich.

Diesbezüglich ist auch ein Verfahren zur Nachrichtenübertragung mittels Winkelmodulation bekannt, bei welchem die Phasenänderung bei der Modulation derart erfolgt, dass im Codierwechselstrom Phasensprünge vorbestimmter Grösse entstehen. Da sich bei jedem Phasensprung auch die Frequenz ändert ist für die Übertragung eine erhebliche Bandbreite erforderlich.

Weiterhin ist eine Pulsamplitudenmodulation PAM bekannt, bei der die Grösse der Amplituden von Halbwellen bezw. Perioden eines Wechselstromes als Kennzustände für die Grösse der PAM Pulse vorgesehen werden. Zur Frequenzreduzierung werden dabei die PAM-Pulse zeitmultiplex auf die Halbwellen bezw. Perioden von um 90° phasenverschobener Codierwechselströme übertragen. Bei dieser Art der Codierung kann nur die Grösse der Amplitude als Kennzustand verwendet werden, sodass nur eine kleine Stufenzahl möglich ist.

Weiterhin ist eine Schaltungsanordnung bekannt, bei der die Grösse von Amplitudenstufen für ein Winkelmodulationsverfahren durch eine den Stufen entsprechende Zahl von parallen Wechselstromkreise mit entsprechenden Dämpfungen bezw. Verstärkungen eingestellt werden kann. Dabei sind Mittel vor gesehen, die eine An-,Aus- oder Umschaltung der Dämpfungen bezw. Verstärkungen je nach vorbestimmter Stufe vornehmen. Auch bei diesem Schaltungsprinzip entstehen Phasensprünge die ein breites Frequenzband benötigen.

Aufgabe der vorliegenden Erfindung ist es nun eine Codierung zu schaffen, die in Verbindung mit bekannten Übertragungsverfahren, die bei der Übertragung eine wesentlich geringere Bandbreite bei gleicher oder noch grösserer Sicherheit als bei den bekannten Verfahren benötigen. Dies wird dadurch erreicht, indem der jeweilige Phasensprung durch mehrere oder eine Vielzahl von Phasensprungstufen gebildet wird. Die Phasensprungstufen werden dabei so erzeugt und so aneinandergereibt, dass eine ununterbrochene Folge entsteht. Als Mass für die Phasenlage wird dabei die positive oder negative Differenz der Summe der Halbperioden- bezw. Periodendauern zu den entsprechenden Bezugsphasen bezw. Bezugshalbperioden bezw. Periodendauern oder der Unterschied der Phasenlage, al so der Halb- bezw. Periodendauern zur Periodendauer des vorhergehenden Phasensprunges, oder bei einer Frequenzmodulation, der grösste und/oder kleinste Absolutphasenwert der zu einer Signalhalbwelle gehörenden frequenzmodulierten Halbwellen hergenommen. Vorzugsweise werden dabei als Codeelemente sinusähnliche Halbwellen bezw. Perioden oder Rechteckimpulse vorgesehen. Die Auswertung erfolgt dabei mit Hilfe eines Mess- bezw. Zählgliedes, das mit einergegenüber der kleinsten vorkommenden Codierfrequenz der Halbperioden bezw. Perioden vielfachen Frequenz gesteuert wird. Die Messimpulse werden dabei mit dem Beginn der jeweiligen Halbperiode bezw. Periode an das Mess- bezw. Zählglied angeschaltet und am Ende derselben wieder abgeschaltet. Der dabei erreichte Ausgang am Mess- bezw. Zählglied ist dann ein Mass für die relative bezw. absolute Phasenlage.

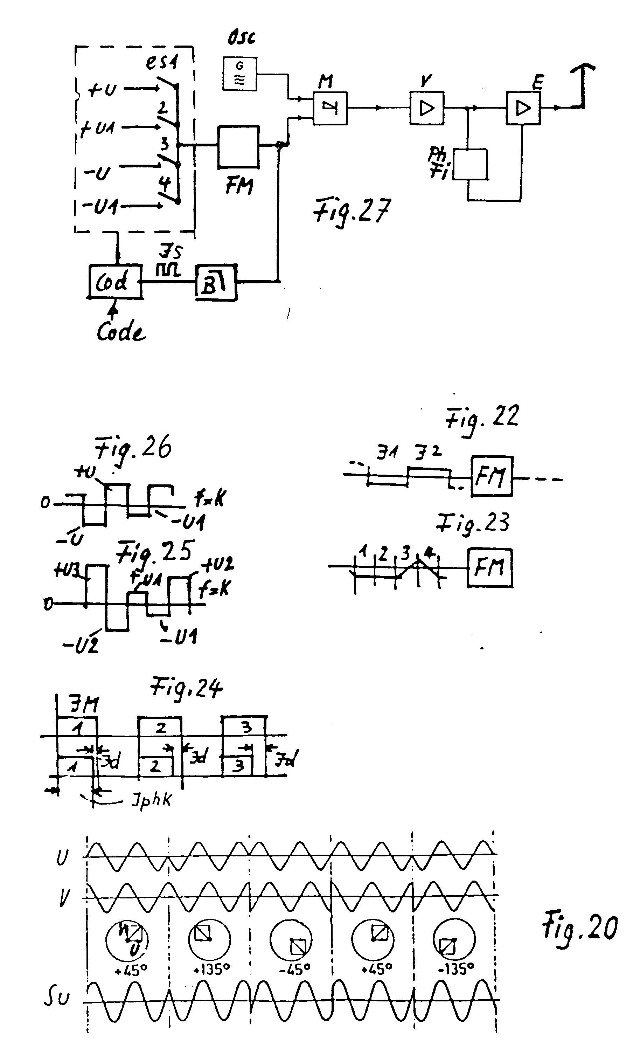

Mit diesem Verfahren ist es nicht möglich im Funkbereich wieder mehr Bandbreite freizubekommen, sondern auch, da es bei allen Arten der Informationsübertragung einsetzbar ist, beim Kabel und bei der Glasfaser. Auch die auf dem Prinzip der Erfindung konzipierten digitalen Verfahren können über vorhandene Trägerfrequenzsysteme übertragen werden. In Fig. 20 ist z.B. das Prinzip einer bisher verwendeten vierwertigen Phasenmodulation dargestellt, bei der mit Hilfe zweier um 90 Grad gegeneinander versetzter Wechselströme gleicher Frequenz U und V, durch Addition derselben die Phasensprünge im Summenwechselstrom SU erzeugt werden. Aus dem Summenwechselstrom , der der Träger des Codes ist, ist ersichtlich, dass dieser keinen gleichförmigen Wechselstrom mehr darstellt. Es entsteht dadurch wie auch aus der Fourier-Analyse bekannt ist, ein sehr breites Frequenzband. Bei der vorliegenden Erfindung hingegen werden im Höchstfall Phasensprünge bis 90 Grad so angeordnet, dass der Codewechselstrom aus einer ununterbrochenen Folge von positiven und negativen Halbwellen besteht. Die Veränderung der Vektoren der Grundwechselströme sin/cos erfolgt dabei insbesondere beim Nulldurchgang des Summen- oder eines der Grundwechselströme. Ein weiteres Merkmal der Erfindung ist, dass der Gesamtphasensprung aus zwei oder mehreren Einzelphasensprüngen zusammengesetzt wird, sodass die jeweilige Frequenzänderung sich in sehr engen Grenzen bewegt, sodass bei phasen- oder frequenzmodulierter Übertragung ein wesentlich schmaleres Band als bei den herkömmlichen Verfahren erforderlich ist, entsteht, besonders dann, wenn das nachfolgend angeführte Merkmal zusätzlich angewendet wird. Wird bei einer Phasenänderung jeweils nur ein Vektor der Grundwechselströme geändert, so hat dies zur Folge, dass auch eine Amplitudenänderung beim Summenwechselstrom entsteht. Eine solche Änderung kann dadurch vermieden werden, indem gleichzeitig beide Vektoren der Grundwechselströme so geändert werden, dass immer dieselbe Amplitude beim Summenwechselstrom entsteht. Ein weiteres Merkmal der Erfindung ist, die Codierung nur mit einem Wechselstrom bezw. sehr schmalbandig vorzunehmen und auf der Basis der Frequenzmodulation zu übertragen. Es ist ja bekannt, dass bei der Frequenzmodulation sowohl die Amplitude als auch die Frequenz in die Bandbreite mit eingehen. Eine schmalbandige Frequenzmodulation ist einer Amplitudenmodulation weit überlegen. Nachstehend wird nun die Erfindung an Hand der Zeichnungen näher erläutert. In diesen sind dargestellt:

Fig.1: Vektoren der Grund- und des Summenwechselstromes.

Fig.2: Vektoren des Summenwechselstromes bei wechselseitiger Änderung der Grundwechselströme.

Fig.3: Stufenweise Phasenänderung mit Darstellung der Amplitudenkorrektur

Fig.4: Eine Phasen- Amplitudencodierung.

Fig.5 und 6: Ein mehrstufiger Phasensprung ohne und mit Amplitudenkorrektur.

Fig. 8 und 9: Darstellung eines Phasensprunges und die Veränderung der Periodendauer.

Fig.7: Prinzip einer Phasenänderung beim Nulldurchgang des Summenwechselstromes.

Fig.10: Eine Differenzphasenänderung von 45 Grad.

Fig.11: Eine stufenweise Phasenänderung.

Fig.12: Auswertung eines über einen Übertragungsweg kommenden phasenmodulierten Wechselstromes.

Fig.13 und 14: Auswertung der Periodendauer.

Fig.15: Schaltung für die Auswertung der Periodendauer.

Fig.16: Schaltung für die Erzeugung eines Wechselstrombinärcodes.

Fig.17: Prinzip der stufenweisen Phasensprünge.

Fig. 18: Vektorelle Darstellung der Amplitudenkonstanthaltung bei der Phasencodierung.

Fig.19: Darstellung eines Phasensprunges an Hand der Grund- und Summenschwingung.

Fig.20: Eine vierwertige Phasencodierung herkömlicher Art.

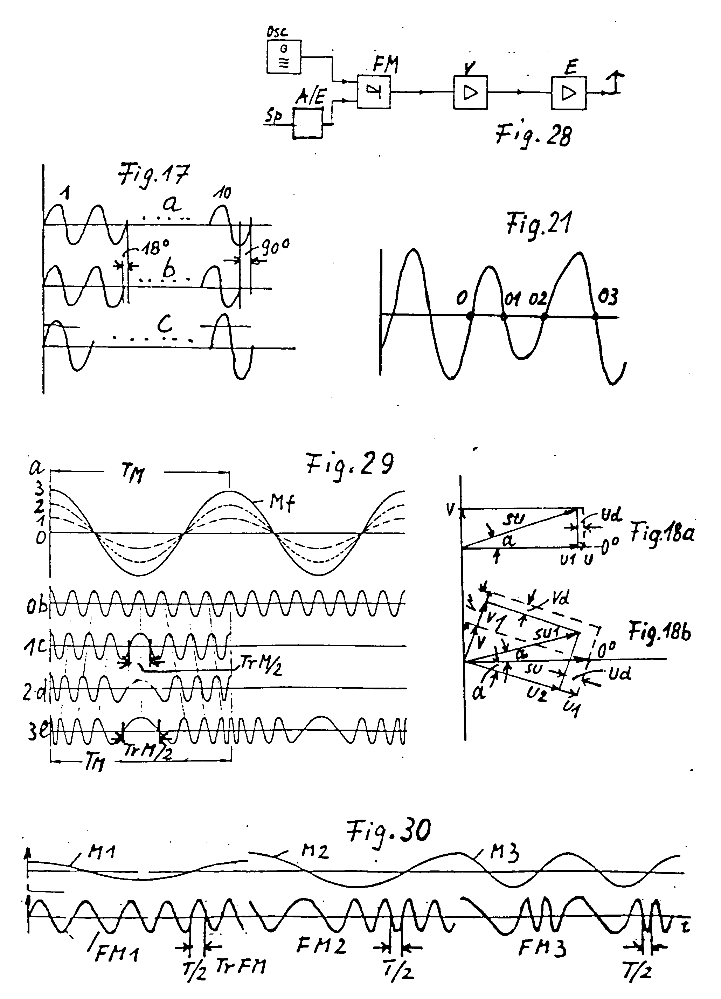

Fig.21: Eine Phasen-Amplitudencodierung.

Fig.22 und 23: Pulsformen für die Frequenzmodulation.

Fig.24: Darstellung der Phasenverschiebung bei Rechteckpulsen.

Fig.25,26 und 27: Prinzip der Funkübertragung von Rechteckpulsen und Darstellung von Codeelementen.

Fig.28: Blockschaltbild für die frequenzmodulierte Funkübertragung eines pulsamplitutenmodulierten Sprachsignals.

Fig.29: Frequenzänderung durch Amplitudenänderung bei der Frequenzmodulation.

Fig. 30: Frequenzänderung bei der Frequenzmodulation bei Änderung der Amplitude und der Frequenz der Modulationsfrequenz.

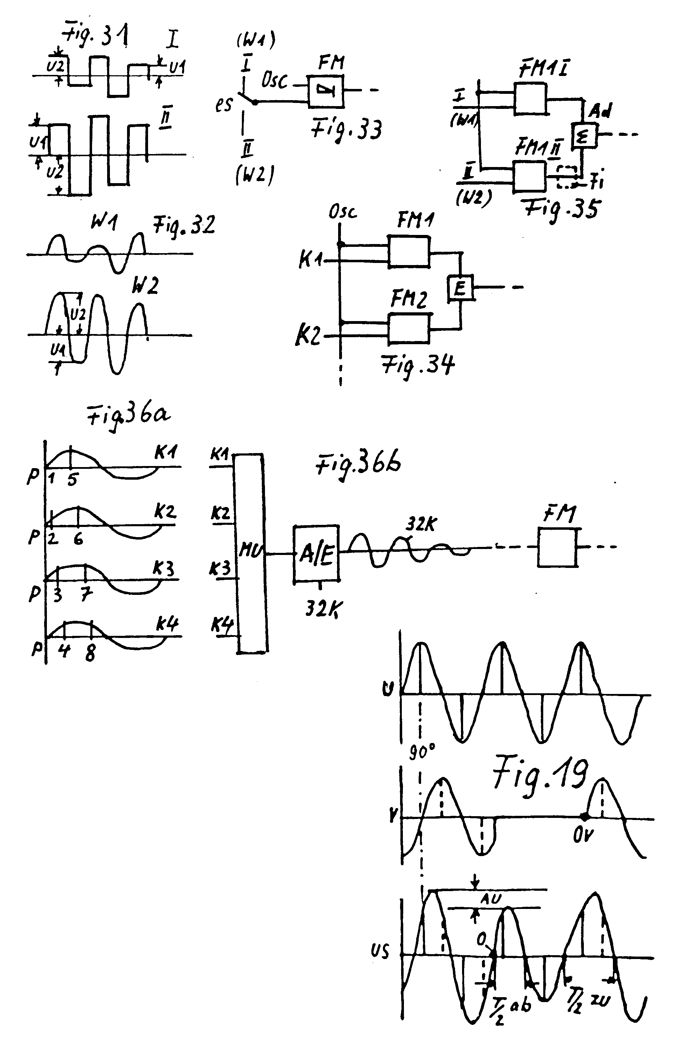

Fig. 31,32,33,34 und 35: Wechselweise und frequenzmultiplexe Übertragung von 2 Kanälen auf der Basis der Frequenzmodulation über einen Übertragungsweg.

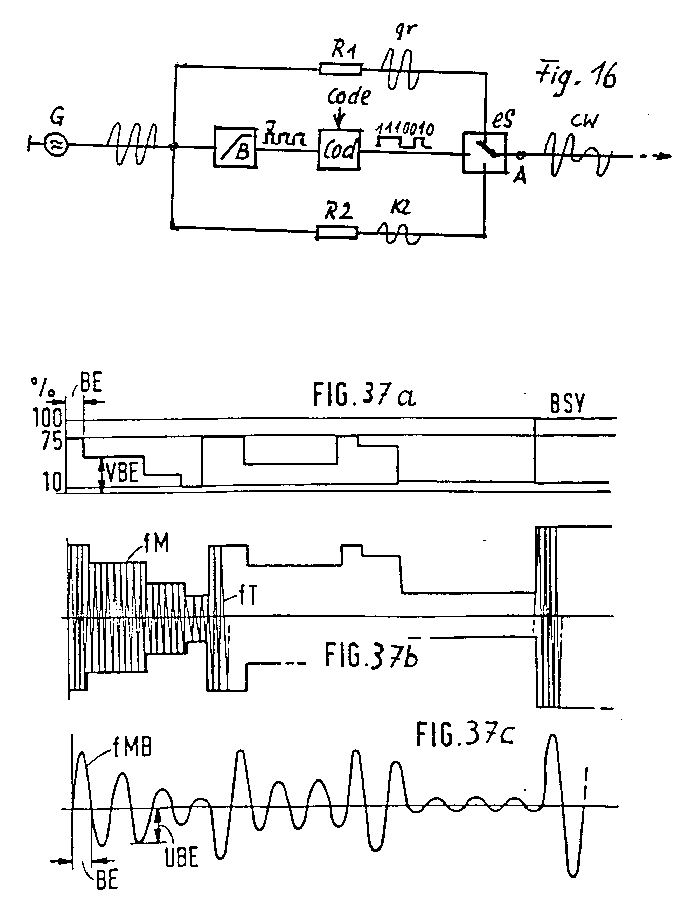

Fig.36: Zeitmultiplexe Übertragung von Sprachkanälen auf Frequenzmodulationsbasis.

Fig.37: Codierung des Luminanzsignals nur mit einem Wechselstrom einer Frequenz.

In Fig.19 ist ein Phasensprung auf dem Prinzip der Quadraturamplitudenmodulation dargestellt. Die Grundwechselströme u (sin) und V (cos), die eine gleiche Frequenz aufweisen, sind gegeneinander um 90 Grad phasenverschoben. Der Summenwechselstrom ist mit us bezeichnet. Wird z.B. beim Null durchgang 0 von us der Wechselstrom v abgeschaltet, so entsteht ein Phasensprung. Der Summenwechselstrom us wird dann gleich wie der Grundwechselstrom u, also phasen- und amplitudengleich. Wird beim Nulldurchgang des Grundwechselstromes v (Ov) dieser wieder abgeschaltet, so wird wieder ein Phasensprung erzeugt. Wie aus dem Verlauf des us-Wechselstromes ersichtlich ist, ändert sich dadurch auch die Periodendauer und zwar wird bei der Abschaltung von v die Periodendauer T/2ab und bei der Zuschaltung von v die Periodendauer T/2zu. Auch die Amplitude des Summenwechselstromes us nimmt dabei um den Betrag AU ab, und bei der Zuschaltung von v um diesen Betrag wieder zu.

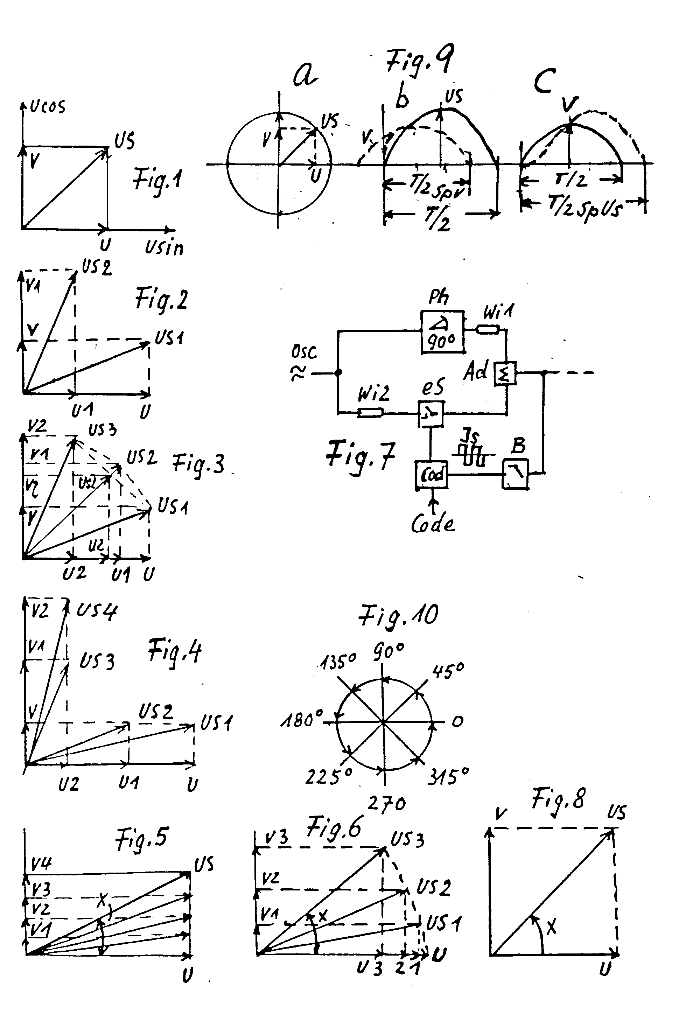

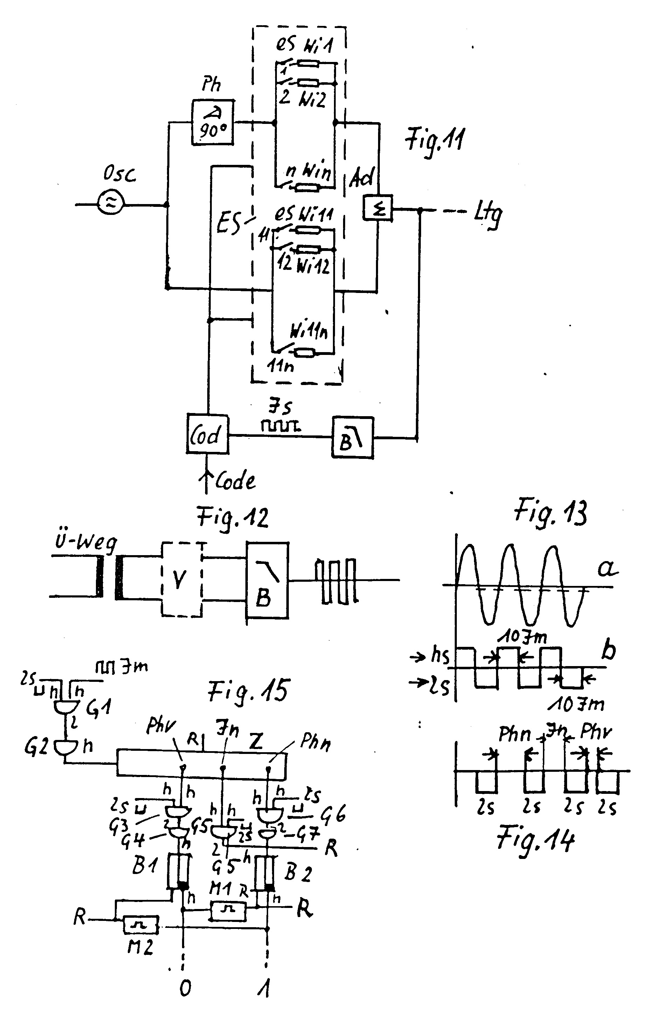

Es gibt mehrere Methoden der Mehrphasenumtastung wie z.B. mittels verschiedener Netzwerke. Bei den nachfolgend aufgeführten Beispielen erfolgt die Phasenänderung auf dem Prinzip der Quadratur-Amplituden-Modulation, in dem in den Stromkreisen der Grundwechselströme die Amplituden durch Widerstandsveränderung, oder es können auch Verstärkungen sein, verändert werden. Der Summenwechselstrom bekommt bei jeder Veränderung eine Phasenverschiebung . Mit dem Prinzip der Vektorendarstellung wird dies erläutert. In der Fig.1 sind Usin und Ucos zwei um 90 Grad versetzte Wechselströme gleicher Frequenz mit den Amplituden u und v. Der Summenwechselstrom bezw. Vektor ist dann US. Da u und v gleiche Grösse haben ist US gegenüber u um 45 Grad voreilend. In der Fig.2 sind die Vektoren u und v so gewählt,dass eine Phasenvoreilung zu u von 22.5 Grad entsteht. Erhalten die Vektoren die Grössen u1 und v1, so entsteht ein Summenvektor US2, der zum Grundwechselstrom v1 22,5 Grad nacheilend ist. Einen Phasensprung kann man auch mehrstufig ausführen, was sich sehr günstig auf die Bandbreite auswirkt. Werden die Phasensprungstufen mit Hilfe zweier um 90 Grad phasenverschobener sinusförmiger Wechselströme durch Addition derselben erzeugt, wobei ihre elektrischen Werte verändert werden, so kann man Amplitudenänderungen in der Weise vermeiden, indem man die den Phasenwinkel bestimmenden Vektoren gleichzeitig entsprechend ändert. An Hand der Fig.3 wird dies näher erläutert. Würde man in dieser die Vektoren u und v linear verändern, so würde sich auch die Summenamplitude verändern. Will man dies vermeiden, so muss entsprechend der Zeichnung vorgegangen werden, also die Stufenänderung nicht linear durchzuführen. Der Abstand u/u1 ist kleiner als der Abstand u1/u2. Dasselbe gilt für v. Die Tatsache, dass mit einer stufenweissen Änderung der Vektoren sich auch der Summenvektor ändert, kann man dazu ausnützen, indem man zusätzlich eine Amplitudencodierung vornimmt. In Fig. 4 ist eine solche Anordnung dargestellt. Die Summenvektoren US1/US2 und US3/US4 haben ungefähr denselben Winkel, aber jeweils verschiedene Amplituden. Bei dieser Anordnung hat man also 4 Kennzustände zur Verfügung. Die Winkelzustände kann man natürlich auch auf 180 und 360 Grad ausdehnen. Man kann auch einen der beiden Überlagerungswechselströme gleich als Synchronisierwechselstrom vorsehen. In Fig. 5 wird ein solches Beispiel gezeigt. Der Wechselstrom hat nur 2 Phasen als Kennzustände. Einmal wird der Wechselstrom mit dem Vektor u und einem Phasenwinkel 0 vorgesehen. Der andere Kennzustand wird durch den Phasenwinkel x gebildet. Die Einstellung des Phasenwinkels erfolgt dabei stufenweise - man kann dies auch kontinuierlich machen - und zwar durch gleiche Stufen v1,v2,v3 und v4. Wie aus der Zeichnung ersichtlich ist, ändert sich dann auch die Amplitude, also der Summenvektor US in Abhängigkeit vom Winkel x. Will man das verhindern, so müssen die Vektoren u und v mit nicht linearen Stufen u1,2,3 - v1,2,3 verändert werden, wie in der Fig.6 gezeigt ist. Die Summenvektoren sind dann immer gleich gross.

In Fig.7 ist eine Prinzipschaltung für das Vektordiagramm der Fig.8 dargestellt. Wie aus der Fig.8 ersichtlich ist, sind nur 2 Kennzustände vorhanden, und zwar der Vektor u und der Winkel x.

Der Vektor v 90 Grad phasenverschoben ist nur für die Einstellung des Winkels x. In der Fig.7 wird im Oszillator Osc der Codierwechselstrom erzeugt. Einmal geht er über einen Phasenschieber von 90 Grad, den Widerstand Wi1 und die Additionsstufe Ad auf den Übertragungsweg. Der andere Stromkreis geht über Wi2 , über den elektronischen Schalter eS und wenn der Schalter geschlossen ist, ebenfalls über die Additionsstufe und zwar überlagert mit dem Wechselstrom 90 Grad verschoben, auf den Übertragungsweg. Gemäss der Fig.8 sind die Amplituden der beiden Wechselströme u + v gleich gross. Der Schalter wird folgendermassen gesteuert. Der Codierwechselstrom 90 Grad phasenverschoben, oder der Summenwechselstrom US wird nach der Additionsstufe Ad zu einem Begrenzer B abgezweigt. Der Begrenzer gibt dann Synchronisierimpulse Js ab, die einem Codierer Cod zugeführt werden. An den Codierer wird der Code ebenfalls angeschaltet, z.B. ein Binärcode bei dem 10 Perioden einen Schritt darstellen. Der Kennzustand 1 sei z.B. Phasenlage u Fig.8 und der Kennzustand 0 die Phasenlage US. Durch diese Synchronisierung wird erreicht,dass immer nur beim Nulldurchgang die Vektoränderung erfolgt, d.h. dieser Vektor v nimmt im Beispiel immer nur den Wert v und Null ein. Im Codierer ist noch ein Zählglied vorhanden, das die Perioden abzählt. Ist der Kennzustand 2 mal 1 vorhanden, so wird erst nach 20 Perioden umgeschaltet, usw. Die Auswertung auf der Empfangsseite kann in bekannterweise mittels Bezugsphase, oder da hier auch eine Differenzphasenmodulation vorliegt, mit einem Frequenzdiskriminator oder einem Phasendiskriminator erfolgen. Im vorliegenden Beispiel wird eine andere Methode verwendet. An Hand der Fig. 9 soll dies erläutert werden. In der Fig.9a sind die Vektoren der beiden Kennzustände v und US dargestellt. In der Fig.9b ist eine Halbwelle des Kennzustandes US dargestellt. Wird der Schalter eS in der Fig.7 geöffnet, so wird der Vektor u gleich Null, sodass ein Phasensprung von US nach v entsteht.Dies bedeutet eine Phasenvoreilung von 45 Grad. Dadurch wird die nächste Halbwelle v, die gestrichelt eingezeichnet ist, verkürzt. Der im Begrenzer entstehende Impuls wird kürzer (T/2Spv). In der Fig. 9c ist der Phasensprung von v nach US dargestellt.Der Wechselstrom wird um 45 Grad nacheilend. Die Periodendauer T/2 wird grösser (T/2SpUS), der Impuls am Begrenzer wird ebenfalls grösser. Bei einem binären Code genügt bereits schon , wenn ein Phasensprung registriert wird. Beim Begrenzer in Fig.7 bleiben die negativen Impulse immer gleich, weil im Beispiel die Phasenänderung bei der Halbwelle 0 bis 180 Grad stattfindet. Man braucht also nur das Zählglied während der gleichen Impulse der negativen Halbwellen sperren und während der positiven Halbwellen freigeben. Jede Vergrösserung oder Verkleinerung der halben Periodendauer T/2 bedeutet eine Änderung des Kennzustandes, also z.B. eine Verkleinerung von T/2 = Kennzustand 0, eine Vergrösserung von T/2 = Kennzustand 1. Auf demselben Prinzip kann man z.B. auch die Differenzphasenmodulation durchführen. In der Fig.10 ist z.B. eine Phasendifferenz von 45 Grad immer voreilend angeordnet.

In Fig.11 ist eine Phasenmodulation dargestellt, bei der die Phasenänderung stufenweise erfolgt. Dies hat den Vorteil, dass sich während des Phasensprunges die Frequenz kaum ändert, dass also kaum bei der Änderung Oberwellen entstehen. Bei dieser Schaltungsanrodnung nach Fig.11 werden mehrere oder eine Vielzahl von Sinus- und Cosinuswechselstromkreise vorgesehen, mit in den jeweiligen Stromkreisen von mehreren oder einer Vielzahl von Mitteln, mit denen eine solche Veränderung der elektrischen Verhältnisse dieser Stromkreise bewirkt wird, dass die vorbestimmte Phasenänderung zustandekommt. Für die Einschaltesteuerung dieser Mittel ist ein Codierer vorgesehen, der in Abhängigkeit vom Code zur Wirkung kommt. Für die phasen gerechte Steuerung ist ausserdem noch ein Abgriff des Summenwechselstromes vorgesehen, mit Mitteln zur An-Aus- und Umschaltung beim Nulldurchgang.

Eine solche stufenweise Änderung kann z.B. nach den Vektordiagrammen der Fig. 2,3,4,5 oder 6 erfolgen. Der Codierwechselstrom wird wieder im Oszillator Osc erzeugt und einmal direkt an die Schalteranordnung ES und einmal über einen Phasenschieber von 90 Grad an diese geschaltet. In die Stromkreise der beiden um 90 Grad gegeneinander phasenverschobenen Wechselströme werden mit Hilfe elektronischer Schalter eS1 bis esn und es11 bis es11n Widerstände geschaltet. Mit diesen Widerständen wird die Grösse der Vektoren u und v der Fig. 2,3,4,5 und 6 festgelegt. Die beiden Wechselströme werden dann im Addierer überlagert und an den Übertragungsweg geschaltet. Die elektronischen Schalter werden vom Codierer aus gesteuert. An den Codierer ist der jeweilige Code "Code" angeschaltet. Die Synchronisierung erfolgt durch Impulse Js, die in dem Begrenzer B mit Hilfe des Summenwechselstromes erzeugt werden. Durch die Bemessung der Widerstände Wi1 bis Win und Wi11 bis Wi11n kann man die Phasenwinkel und auch die Amplitudengrössen des jeweiligen Summenwechselstromes einstellen. Vorzugsweise wird eine Änderung der Phase und ggf. auch der Amplitude immer beim Nulldurchgang des Summenwechselstromes vorgenommen. Selbstverständlich kann man die Veränderung der Widerstände auch kontinuierlich vornehmen, z.B. mit Hilfe eines kleinen Elektromotors.

Die Auswertung der durch Phasenmodulation codierten Daten kann in bekannterweise mit Bezugsphase, oder wenn sie nach dem Prinzip der Differenzphasenmodulation erfolgt, durch Vergleich der Phase zweier aufeinanderfolgenden Zustände, wobei der 1. Zustand gespeichert wird, oder auch mit Hilfe eines Frequenzdiskriminators , Koinzidenzdemodulators oder anderer Phasenvergleicher durchgeführt werden. Gemäss einer Ausbildung der Erfindung wird ein neues Auswerteprinzip angewendet, wie bereits kurz bei der Beschreibung der Fig.9 erläutert. Bei diesem Prinzip wird als Mass der Phasenlage bezw. Phasenänderung die Halb- bezw. Periodendauer als Absolut- bezw. Bezugswert hergenommen. Die Auswertung geschieht dabei in der Weise, indem mit Hilfe eines Messbezw. Zählgliedes , das mit einer gegenüber der kleinsten vorkommenden Codierfrequenz der Halbbezw. Perioden vielfachen Frequenz gesteuert wird. Die Messimpulse werden dabei mit dem Beginn der jeweiligen Halb- bezw. Periode an das Messbezw. Zählglied angeschaltet und am Ende derselben wieder abgeschaltet. Der am Ende erreichte Ausgang am Mess- bezw. Zählglied ist dann ein Mass für die relative bezw. absolute Phasenlage. An Hand der Fig. 12,13,14 und 15 wird dies näher erläutert. Der vom Übertragungsweg in Fig.12 kommende Wechselstrom wird, wenn erforderlich über einen Verstärker V, einem Begrenzer B zugeführt. Im Begrenzer werden die Wechselstromperioden in Impulse hs/1s , wie aus der Fig. 13 ersichtlich ist, umgewandelt. In der Fig. 13a ist der Codierwechselstrom dargestellt. Um bei nacheilender Phasenverschiebung , wie in Fig. 9c dargestellt, einen sicheren T/2SpUS, also hs-Impuls zu erhalten, kann man die Nullinie, wie in der Fig.13a gestrichelt eingezeichnet, etwas zur Minusseite verschieben. Dadurch entstehen dann immer gleiche ls-Impulse. Die Messimpulse Jm haben im Beispiel die 10-fache Frequenz, sodass auf einen hs-bezw. ls-Impuls 10 Jm-Impulse fallen. Wird die Nullinienabsenkung durchgeführt, so ist dies u.U. auch bei den Messimpulsen zu berücksichtigen. In der Fig. 15 ist eine Schaltungsanordnung zur Decodierung von Phasenlagen bezw. Phasensprüngen dargestellt. Dies erfolgt mit Hilfe eines Zählgliedes Z, das mit einer vielfachen Zahl von Ausgängen gegenüber der Frequenz der Codierhalbperioden bezw. Perioden ausgestattet ist. Weiterhin ist ein Erzeuger von Messimpulsen und Mittel zur Aufbereitung der Information für die Steuerung vorgesehen. Eine Gatteranordnung sorgt dafür, dass nur während der zu messenden Halb- bezw. Periode eine Steuerung des Zählgliedes erfolgt. Ausserdem sind in den Ausgängen des Zählgliedes Mittel angeordnet, die die Stellung des Zählgliedes nach dem Ende der Halb-bezw. Periodendauer markieren. Im Beispiel bewegen sich die Phasensprünge zwischen 0 und $90°$ und $90°$ und $0°$. Wie in der Fig.14 dargestellt,ist daher einmal der Abstand zwischen zwei

Is-Impulsen Phn bei nacheilender Phasenverschiebung und Phv bei voreilender Phasenverschiebung. In der Fig.15 liegen am Gatter G1 einmal die Messimpulse Jm und am anderen Eingang die Impulse Is. Is-Impulse sperren das Gatter. Sind sie nicht da liegt an diesem Eingang h (high), sonst l (low). Während der positiven Halbwellen (Fig 13a) ist das Gatter G1 wirksam, am Ausgang sind dann l-Impulse, die mit Hilfe des Gatters G2 zu h-Impulsen umgekehrt werden. Diese Impulse werden dem Zählglied Z zugeführt. Sind die Abstände zwischen den Is-Impulsen gleich, in Fig.14 gleich Jn, so wird das Zählglied immer bis zum Ausgang Jn geschaltet. An diesem Ausgang ist ein Gatter G5, ausserdem liegt an dem Gatter noch ein Is-Impuls so, dass beim Vorhandensein desselben am Gattereingang h liegt. Der Gatterausgang von G5 wird an die Rückstellung des Zählgliedes, ggf. unter Zwischenschaltung eines Potentialumkehrgatters, geführt. Das Zählglied wird also mit dem Impuls Is zurückgeschaltet. Ist der Abstand zwischen den Impulsen gleich Phn (Fig.14), so wird das Zählglied Z bis zum Ausgang Phn geschaltet. An diesem Ausgang liegt das Gatter G6. Am anderen Eingang von G6 liegt der Impuls Is so, dass er bei Vorhandensein h anlegt. Am Ausgang des Gatters G6 ist dann l. Mit Hilfe des Gatters G7 wird das Potential auf h umgekehrt. Der Ausgang des Gatters G7 wird an eine bistabile Kippstufe B2 geführt. Am Ausgang desselben liegt dann h. Mit diesem Potential wird eine "1" markiert. An diesem Ausgang ist auch eine monostabile Kippstufe M2 angeschlossen. Der Ausgang derselben liegt an der bistabilen Kippstufe B1, die nun , falls sie in Arbeitsstellung ist, zurückgeschaltet wird. Über R erfolgt auch eine Zurückschaltung des Zählgliedes Z. Ist der Abstand zwischen den Is-Impulsen gleich Phv (Fig.14),so wird das Zählglied nur bis zum Ausgang Phv geschaltet. Entsprechend dem Ausgang Phn kommt nun G3,G4 und die bistabile Kippstufe B1 zur Wirkung. Am Ausgang von B1 liegt nun das Potential h, was dem binären Kenn zustand 0 entspricht. Über die monostabile Kippstufe M1 wird die bistabile Kippstufe B2 wieder in die Ausgangsstellung gebracht und über R eine Rückstellung des Zählgliedes vorgenommen. Auf diese Art kann z.B. eine binäre Codierung übertragen und ausgewertet werden. Man kann u.U. auch die Phv, In und Phn-Ausgänge jeweils an 2 oder mehrere Zählausgänge schalten, wenn Toleranzen den Abständen zwischen den Is-Impulsen zugestanden werden. Erfolgt die Phasenänderung stufenweise (Fig.5,6) oder kontinuierlich, so verteilt sich die Phasenänderung auf die Zahl der Stufen bezw. auf die Zahl der Perioden, die in dem kontinuierlichen Vorgang enthalten sind. Ist die Phasenänderung in z.B. 10 Stufen aufgeteilt, wobei jeder Stufe eine Periode des Wechselstromes zugeordnet ist und betragt die Phasenänderung 90 Grad, so kommt auf jede Periode eine Phasenstufenänderung von 9 Grad. Aus der Fig.17 ist dies ersichtlich. In der Fig. 17a sind 10 Perioden ohne Phasenänderung und in der Fig.17b 10 Perioden mit je 9 Grad , also 90 Grad Phasenänderung, dargestellt. Aus der Fig. 17b ist ersichtlich,dass bereits nach 2 Perioden eine Phasenänderung von 18 Grad und nach 10 Perioden eine solche von 90 Grad vorhanden ist. Ohne Bezugsphase muss erst ermittelt werden mit welcher Periode die 90 Grad Phasenverschiebung erbracht sind. Wird z.B. mit der 2. Periode (Fig.17b)mit dem Abmessen begonnen, so kann man nie den Abstand von 90 Grad erhalten. Man muss also eine Schaltung hernehmen, die solange von Periode zu Periode schaltet, bis eine Phasenverschiebung von 90 Grad gemessen werden kann. Dabei muss aber ein phasengerechter Einsatz für jeweils 10 Perioden durchgespielt werden.

Diese Erfindung kann z.B. angewendet werden bei der Wechselstromtelegrafie (frequenzmultiplex). Wird z.B. einem Kanal eine Frequenz von 3000 Hz zugeordnet und für einen Schritt eine Stufenzahl mit 20 Perioden , so sind 150 Schritte je Sekunde möglich. Durch die stufenweise Phasenänderung ist nur ein sehr schmales Band erforderlich. Man kann natürlich auch eine Phasenverschiebung mit Amplitudenstufen verbinden. Diese Methode lässt sich auch bei der 4 PSK, 4 QAM, 8 PSK, 16 PSK und 16 QAM einsetzen. Auch bei der digitalen als auch analogen Sprachübertragung z.B. nach dem Pulscodemodulationssystem und Pulsamplitudenmodulationssystem (Patent DE 30 10938) Patentanmeldung DE P 33 40 377.5) als auch beim Fernwirken ist diese Methode anwendbar. Will man z.B. Messwerte übertragen, wie z.B. Wasserstände die sich langsam ändern, so kann man einen Dauerwechselstrom geben, dessen Phase sich langsam entsprechend dem jeweiligen Wasserstand ändert. Durch eine Erhöhung der Amplitude während eines kurzen Zeitraumes, z.B. 60 Sekunden, kann man stündlich oder täglich eine Vergleichsphase übertragen. Dasselbe gilt auch für die Temperaturübertragung. Die Pegel können dabei klein gehalten werden. Auch für die Verschlüsselung von Nachrichten ist diese Art der Codierung gut geeignet. So kann der jeweilige Phasensprung in mehrere oder eine Vielzahl von Phasenstufen unterteilt werden, wobei diese vor- und nacheilende Werte annehmen können. Dem Phasensprung selbst wird dabei ein vorbestimmter vor- oder nacheilender Phasensprung zugeordnet. Bei Bedarf kann zusätzlich eine Amplituden- bezw.Scheinamplitudencodierung vorgesehen werden. Wird z.B. die "O" mit einer Phasenverschiebung von 50 Perioden voreilend und die "1" mit einer solchen mit 50 Perioden nacheilend codiert, so kann man z.B. während der jeweiligen 50 Perioden verschieden grosse Phasenverschiebungen vorsehen, wobei die Gesamtphasenverschiebung immer dieselbe sein kann.

Während der periodenweisen stufenweisen Phasensprünge wird die Periodendauer kleiner bezw. grösser, d.h. dass sich damit auch die Frequenz ändert Man kann also solche Phasensprünge durch Umschaltung auf eine andere Frequenz und durch die Zahl von Perioden codieren. Es muss lediglich gewährleistet sein, dass eine Umschaltung auf eine andere Frequenz beim Nulldurchgang erfolgt. So ist z.B. bei einer Frequenz f1 und der anderen von f1/2 immer nach einer Periode von f1/2 ein phasengleicher gemeinsamer Nulldurchgang vorhanden. Der Phasensprung wäre dann immer 360 Grad. Auf diese Weise kann also jeder beliebige Phasensprung erzeugt werden. Den Übergang von einer Frequenz zu der anderen kann man auch kontinuierlich machen. Für diesen Zweck kann man eine Frequenzmodulation vorsehen. In der Fig. 22 ist ein Übergang von einer Frequenz zu einer anderen mit Hilfe von Rechteckimpulsen dargestellt, d.h. also von einer Periodendauer zu einer anderen.Die Differenz zwischen den Periodendauern ist dann ein Mass für die Phasenverschiebung bezw. Phasenlage, wie auch in der Fig. 24 gezeigt. In der Fig.22 werden die binären Impulse J1,J2, usw. einem Frequenzmodulator FM zugeführt. Bei kleinem Frequenzhub ist praktisch die Bandbreite gleich der 2-fachen Modulationsfrequenz. Will man von der einen Frequenz zur anderen einen Frequenzübergang ähnlich der weichen Tastung bei der Telegrafie, so müssen die Eingangssignale z.B. entsprechend der Fig. 23 Schritt 3,4 gestaltet werden. Bereits mit einem Kondensator lässt sich eine Abflachung erreichen.

Die Auswertung einer laufenden Frequenzänderung ist nur mit Hilfe einer Summierung von Phasensprüngen möglich. Jede Änderung der Frequenz bedeutet im Vergleich zu einer Mittenfrequenz einen Phasensprung. Für einen Schritt bezw. Impuls muss man dann also soviel Perioden vorsehen, dass bei der Summierung ein messbarer Phasensprung vorhanden ist. Gut ausreichend ist z.B. ein Summenphasensprung von 60 Grad, wenn man einen Periodendauervergleich vornimmt. Bei 60 Grad ist der cos 0.5, sodass bei der Halbperiode eine Verkürzung z.B. auf 3/4 der Halbperiodendauer zustandekommt (Fig.9b). Der ankommende Codierwechselstrom wird, wie in der Fig. 12 dargestellt, ggf.über einen Verstärker V einem Begrenzer B zugeführt. In diesem erfolgt eine Umwandlung in Impulse Jm. Die positiven Impulse sind mit hs und die negativen mit ls bezeichnet. Diese Impulse stellen die Halbperiodendauer dar,die gemessen und verglichen werden mit der Halbperiodendauer der Mitten- bezw. Vergleichsfrequenz. In Fig.24 sind mit JM die positiven Impulse der Mittenfrequenz, die bei der Übertragung nicht in Erscheinung tritt, und mit Jphk die kleiner werdenden Impulse der zunehmenden Frequenz dargestellt. Es liegt dann ein voreilender Phasensprung vor. Man sieht, dass gegenüber der Mittenfrequenz die Impulsdifferenz Jd immer grösser wird. Die Frequenzänderung braucht dabei nicht gleichförmig geschehen. Man kann auch die Summe der Unterschiede der Phasenstufen gegenüber einer Normalstufe messen.

In den Fig.18a,b ist auf der Basis von Vektoren eine stufenweise Phasenänderung dargestellt. In der Fig.18a soll der Vektor u um den Winkel a voreilend phasenverschoben werden. Für diesen Zweck wird ein Wechselstrom gleicher Frequenz mit dem Vektor v, der gegenüber u um 90 Grad voreilend phasenverschoben ist, addiert. Ohne zusätzliche Änderung des Vektors u würde der Summenvektor entsprechend der Fig.5 sich vergrössern. Der Vektor u muss deshalb um den Betrag ud auf u1 verkleinert werden. Beim Nulldurchgang von su in Fig.18b soll eine weitere um den gleichen Betrag voreilende Phasenverschiebung stattfinden. Soll der Summenvektor sul gleich dem von su sein, so muss sowohl der Vektor u1 um ud auf u2 verkleinert werden,als auch die Stufe V' um vd auf v1.

Die Auswertung der Kennzustände kann durch einfache Abmessung einer Halbperiode erfolgen. Mit einer Begrenzerschaltung nach Fig.12 (B) oder mit einem Schmitt-Trigger können die für den Vergleich erforderlichen Impulse erzeugt werden. Zusätzlich kann man dann noch die Zahl der Perioden abzählen. Wird z.B. die Periodendauer im Verhältnis 2:3 gewählt, so kann eine Umschaltung auf die kleinere Frequenz nach 3 Perioden erfolgen. Wählt man die grössere Frequenz mit 2400 Hz, so ist die kleinere Frequenz 1600 Hz. Auf diese Art könnte man 800 bit/s codieren. Die Umschaltung erfolgt immer bei Null. Solche Anordnungen sind auch für Einkanaldatenübertragungssysteme geeignet. Werden noch Filter für die einzelnen Frequenzen vorgesehen,so kann z.B. zwischen 2400 Hz und 1600 Hz noch eine Frequenz untergebracht werden.

Es sind bereits Verfahren bekannt, bei denen bei der Pulsmodulation die Pulse durch Sinushalbwellen bezw. Perioden, die in einer ununterbrochenen Folge von positiven und negativen Halbwellen gesendet werden und bei denen die Kennzustände durch die Grösse der Amplituden codiert werden, dargestellt werden. So ist z.B. eine Pulsamplitudenmodulation (Offenlegungsschrift DE 33 40 377 A1) bekannt, bei der Probeentnahmeimpulse durch die Grösse der Halbwellen- bezw. Periodenamplituden eines Wechselstromes einer Frequenz analog codiert werden.

In den Fig. 29 und 30 sind frequenzmodulierte Schwingungen dargestellt, bei denen die Information durch die Amplituden von Halbwellen eines Wechselstromes einer Frequenz codiert wird. Die jeweiligen Amplitudenwerte der Halbwellen der Signalspannung werden dabei durch einen grössten oder kleinsten Absolutphasenwert der zu einer Signalhalbwelle gehörenden frequenzmodulierten Halbwellen markiert.

In Fig.28 ist das Prinzip eines UKW-Sprechfunksenders dargestellt. Das NF-Signal wird einem Analog/Einfrequenzwechselstromwandler AE zugeführt. In bekannterweise wird dann dieser Codierwechselstrom einem Frequenzmodulator FM mit Oszillator Osc zugeführt. Über Verstärkerstufen V wird dann der modulierte Träger der Endstufe E und der Antenne zugeführt.

In der Fig.30 ist eine frequenzmodulierte Schwingung in Abhängigkeit von der Amplitude und Frequenz der Modulationsschwingung dargestellt. M1 ist eine Vergleichsamplitude. M2 ist die doppelte Vergleichsamplitude und M3 ist die doppelte Vergleichsamplitude mit doppelter Frequenz. FM1,FM2 und FM3 sind die dazugehörigen frequenzmodulierten Schwingungen. Vergleicht man die zu den verschiedenen Modulationsschwingungen M1,M2,M3 entstehenden kürzestens halbe Periodendauern T/2TrFM miteinander, so sieht man, dass jeweils beinahe eine Halbierung der Periodendauer stattfindet, d.h. dass bei Verwendung nur einer Frequenz für die Codierung von Sprache bezw. Daten das Frequenzband wesentlich kleiner wird.

Eine solche Codierung nach Patent DE 30 10 938 kann man auch bei vorhandenen Funkgeräten einsetzen, z.B. in Fig.28. Man kann die digitale Codierfrequenz noch kleiner machen, wenn an Stelle von 2 Stufen mehr Stufen z.B. 3, wie in der Fig.29a dargestellt, vorgesehen werden. Mit einer Halbwellen codierung und ggf. Addition nach dem Quadratur-Amplituden-Modulationsprinzip ist nochmals eine Frequenzverkleinerung möglich. Wie aus der Fig. 29 ersichtlich ist, sind die Halbperiodendauern der frequenzmodulierten negativen Halbwellen TrM/2 bei den 3 verschiedenen Amplitudengrössen 1,2,3 wie in den Fig.29c,d,e gezeigt ist, gut messbar.

An Stelle mit Wechselstrom kann man den Frequenzmodulator auch mit Gleichstrom analog oder digital steuern. In der Fig.27 ist eine Schaltung für eine digitale Steuerung dargestellt. Die Frequenz ist dabei immer dieselbe Der Code ist durch die Amplitudengrösse der Rechteckimpulse gegeben. Die Gleichstromimpulse werden durch die elektronischen Schalter es1-es4 getastet. Der Codierer Cod steuert die elektronischen Schalter. An den Codierer Cod wird einmal der Code und dann noch die Synchronisierimpulse Js,die im Begrenzer erzeugt werden, herangeführt. Der Begrenzer erhält einen Abzweigwechselstrom vom Frequenzmodulator. Mit den Synchronisierimpulsen wird immer der Nulldurchgang des Abzweigwechselstromes markiert. Im vorliegenden Beispiel ist der Frequenzmodulator FM an den Amplitudenmodulator M, an den auch der Oszillatorwechselstrom Osc geführt ist, angeschaltet. Über Verstärkerstufen V und der Endstufe E wird dann der modulierte Träger an die Sendeantenne geführt. Zur Kompensation der Stör- und Oberwellenspannungen kann man diesen über ein Filter Fi, das die Nutzsignale sperrt und einem Phasendreher Ph von 180 Grad über einen Abzweigweg der Endstufe wieder zuführen. In den Fig. 26 und 25 ist einmal ein 2-stufiger und einmal ein 3-stufiger Rechteckimpulscode einer Frequenz dargestellt.

Nachstehend wird eine Codierung beschrieben, bei der zur Unterscheidung 2er Informationskanäle in der Empfangsstelle die Codeelemente beider Kanäle eine solche unterschiedliche Amplitudengrösse erhalten, dass bei einer frequenzmodulierten Übertragung ein auswertbarer Frequenzabstand zustandekommt. In den Fig.31 und 32 ist dies dargestellt. In diesen ist eine Codierung von 2 Kanälen und zwar einmal mit Rechteck- und einmal mit Halbwellenpulsen dargestellt. Jeweils sind nur 2 Kennzustände vorhanden, u1 und u2. Die kleinste Amplitude der Kanäle II und W2 ist dabei doppelt so gross als die grösste Amplitude der Kanäle I und W1. Für die Codierung wird jeweils nur eine Frequenz verwendet, eine Phasengleichheit ist nicht erforlich. Da im Frequenzmodulator die verschieden grosse Amplituden verschiedene Frequenzen erzeugen (Fig.30), kann man beide Kanäle - es können auch mehrere sein - über einen Übertragungsweg senden. In Fig.33 z.B. wird mit Hilfe eines elektronischen Schalters eS von einem Kanal mit der kleineren Amplitudencodierung auf den mit der grösseren Amplitudencodierung umgeschaltet. Werden in der Fig. 31 die Codierungen gegeneinander um 180 Grad versetzt, so erfolgt die Umschaltung beim Nulldurchgang. In der Fig.32 ist es zweckmässig, dass die Codierungen phasengleich sind, sodass dann an den Frequenzmodulator FM ein Wechselstrom in einer ununterbrochenen Folge von positiven und negativen Halbwellen angeschaltet wird. Die Codierung der Kanäle muss mittels Perioden erfolgen, damit jeweils abwechselnd eine Halbwelle von W1 und die nächste Halbwelle von W2 an den Frequenzmodulator geschaltet werden. In der Fig.34 sind für die Übertragung 2 Frequenzmodulatoren FM1 und FM2 vorgesehen, die über einen Entkoppler E das jeweilige Wechselstromband an den Übertragungsweg geben. Der Oszillator ist für alle Kanäle gemeinsam. In der Fig.35 sind für die Übertragung der beiden Kanäle zwei gleiche Frequenzmodulatoren FM1I und FM1II vorgesehen. Da, wie aus der Fig.29 hervorgeht, die grossen Amplituden einen grossen Frequenzbereich einnehmen, ist es erforderlich mit dem Filter Fi den Frequenzbereich der kleinen Amplituden auszufiltern. Über einen Addierer Ad werden dann beide Frequenzbänder zusammengeführt und übertragen. In der Fig.16 ist eine Schaltung für die Erzeugung von kleinen und grossen Amplituden von Wechselstromhalbwellen bzw. Perioden oder Rechteckimpulsen und deren phasengerechte Anschaltung z.B. bei 180 und 0/360 Grad. Im Generator G wird der Codierwechselstrom erzeugt. Für die grossen und kleinen Amplituden sind 2 Stromkreise mit den Widerständen R1 und R2 vorgesehen. Diese Widerstände sind so bemessen, dass beim Schliessen des jeweiligen Stromkreises mit dem elektronischen Schalter eS am Ausgang A die vorbestimmte Amplitudenstufe entsteht. Die Steuerung des elektronischen Schalters eS erfolgt durch einen Codierer Cod, dem einmal der Code und über einen Begrenzer -es kann auch ein Schmitt-Trigger sein - dem ebenfalls der Codierwechselstrom zugeführt wird, die Synchronisierimpulse angeschaltet werden, die aus dem Codierwechselstrom gewonnen werden. Durch die Synchronisierimpulse wird gewährleistet, dass der elektronische Schalter immer beim Nulldurchgang betätigt wird.

Gemäss einer Ausbildung der Erfindung wird daher nur die Amplitude von periodischen Gleich- oder Wechselstromimpulsen , insbesondere einer Frequenz, die in einer ununterbrochenen Folge gesendet werden, für die Codierung von Information vorgesehen. Mit dieser Methode wird dann das Frequenzband bei den Winkelmodulationsverfahren wesentlich verkleinert. In Fig.28 ist das Prinzip der Anwendung bei einem Sender für Funkübertragung mit Frequenz-Vorstufenmodulation dargestellt. Die Trägerfrequenz wird im Oszillator Osc/G erzeugt und dem Frequenzmodulator FM zugeführt. Die Sprache Sp soll im FM frequenzmoduliert werden. Zu diesem Zweck wird ein Analog/Einfrequenzwechselstromwandler A/E zwischen Sprachsignal und Frequenzmodulator FM eingefügt. Das heisst die Sprache wird in einen Wechselstrom einer Frequenz analog oder digital umcodiert. Nur die Amplituden dieses Wechselstromes beinhalten die Information. Das Band der frequenzmodulierten Schwingung wird dadurch wesentlich schmaler. Das frequenzmodulierte Signal wird dann über den Verstärker V, der Endstufe E der Sendeantenne S zugeführt. Auf der Empfangsseite wird dann mit Hilfe der bekannten Verfahren (z.B. Flankendiskriminator, Verhältnisdiskriminator) der Einfrequenzwechselstrom wieder erhalten. In einem Einfrequenzwechselstrom/Analogwandler E/A wird dann das Sprachsignal wieder hergestellt.

Nachstehend werden nun solche Analog/Einfrequenzwechselstromwandler bezw. digital/Einfrequenzwechselstromwandler bezw. Einfrequenzimpulswandler erläutert. Im Patent DE 30 10 938 ist ein Verfahren für eine digitale Informationscodierung offenbart, bei dem binäre Codeelemente aus den Halbwellen bezw.Perioden gebildet werden, die in einer unmittelbaren Aufeinanderfolge von positiven und negativen Halbwellen gesendet werden. Die beiden Kennzustände 1,0 werden dabei durch einen grossen Amplitudenwert und einen kleinen Amplitudenwert codiert. Als Codeelement ist die Periode vorgesehen. Bei der digitalen Sprachübertragung ist für die Intervallcodierung 8bit erforderlich. Das Codeelement kann auch mehrstufig, wie z.B. in Fig.4 gezeigt, mit vor-und nacheilender Phasenverschiebung ausgeführt werden. Ein Prinzip der Analog/Einfrequenzwechselstromwandlung ist in der europäischen Patentanmeldung 0110427 offenbart. Bei diesem werden die Werte der Probeentnahmen analog entsprechend der Pulsamplitudenmodulation PAM durch die Amplituden der Halbwellen bezw. Perioden nur eines Wechselstromes codiert. Diesem Codierwechselstrom wird dabei bei Verwendung von Halbwellen die halbe Probeentnahme- und bei Verwendung von Perioden die Probeentnahmefrequenz zugeordnet. Die Intervallwerte werden dabei durch die Grösse der Amplituden analog codiert.

In der deutschen Offenlegungsschrift Nr.3223312 ist ein Verfahren offenbart, bei dem das Luminanzsignal, also die Helligkeit der Bildpunkte,durch die Halbwellen bezw. Perioden nur eines Wechselstromes codiert werden. Mit den Fig.37a,b,c wird dieses Prinzip erläutert. In der Fig.37a ist das Luminanzsignal dargestellt, mit einem Weisswert (10), einem Schwarzwert (75) mit Zwischenwerten und Zeilenimpulsen (100). Mit BE ist der Bildpunkt bezeichnet. VBE ist die Helligkeitsspannung. Bei den bisherigen Verfahren der Luminanzsignalübertragung werden die Bildpunktspannungen einem Träger fT in Fig.37b aufmoduliert und zwar durch Amplitudenmodulation. Die Modulationsfrequenz fM kann vom Gleichstrom bis zu 5 MHz reichen. Wird jeder Bildpunkt durch die Amplitude einer Halbwelle bezw. Periode nur eines Wechselstromes codiert, so kann man nur mit einem Wechselstrom die Luminanzsignale codieren. In der Fig.37c ist ein solches Beispiel dargestellt. fMB ist die halbe Abtastzeit der Bildpunkte. Für die Codierung der Bildpunkte sind die Halbwellen des Codierwechselstromes vorgesehen. Eine Halbwelle entspricht also dem Bildpunkt BE. Die Amplitude UBE der jeweiligen Halbwelle entspricht der jeweiligen Bildpunktspannung VBE der Fig.37a. Aus der Fig.37c geht hervor, dass das Luminanzsignal sehr schmalbandig frequenzmoduliert übertragen werden kann. Da bei der europäischen Fernsehnorm für eine Zeile 64us vorgesehen sind, in denen auch das Austastsynchronsignal mit 11.5us enthalten ist, kann man in die 11.5us z.B. den digitalisierten Ton mit hineinbringen, wenn die Farbsignale anderst codiert werden,also wenn der Burst nicht mehr erforderlich wird (z.B. deutsche Patentanmeldung P 32 29 888), oder aber man kann auch die Schwarz-Schulter für die digitale Toncodierung mit verwenden. Man kann zusätzlich seriell die Grundfarbensignale rot und blau übertragen (DE P 3229888). Die FBAS-Signalfrequenz ist dann entsprechend höher (FBAS = Farb-Bild-Austast-Synchronsignal). Es lassen sich natürlich alle Übertragungsmethoden, die in den deutschen Offenlegungsschriften DE 32 23 312, DE 32 26 382, DE 32 29 139, DE 3229888 oder in der US-Patentanmeldung Serial-Nr.519657 offenbart sind, auf diese Methode übertragen.

Diese Übertragungsmethode kann auch bei Zeitmultiplexbetrieb verwendet werden und zwar analog und digital. Die Prinzipschaltung für eine analoge zeitmultiplexe Übertragung von Sprache ist in der Fig.36 dargestellt. In der Fig.36a sind 4 Sprachkanäle zeitmultiplex zusammengefasst. Da die Probeentnahmefrequenz 8 KHz ist, sind für die 4 Kanäle eine Abgriffsfrequenz von 32 KHz erforderlich. Nacheinander werden die Probeentnahmen P1,2,3,4,. usw. vom Multiplexer Mu Fig.36b abgegriffen. Für die Codierung ist dann ein Einfrequenzwechselstrom von 32 KHz, falls man die Perioden als Codeelemente vorsieht, notwendig. Im Analog/Einfrequenzwechselstromumsetzer A/E werden dann die Probeentnahmen auf die Amplituden der Perioden analog übertragen.Am Ausgang des A/E ist dann ein Wechselstrom von 32 KHz - Bei Verwendung von Halbwellen als Codeelemente 16KHz - der dann dem Frequenzmodulator FM zugeführt wird. Die Übertragung kann sowohl auf Funk-oder Kabelbasis erfolgen. Bei digitaler Codierung sind bei 8bit-Codewörtern 64 KHz bei Periodencodeelementen und 32 KHz bei Halbwellencodeelementen erforderlich.

Die erfindungsgemässe Phasencodierung kann auch für mehrwertige Codierungen und für die Verschlüsselung von Nachrichten verwendet werden. So kann man z.B. 5,10,15 und 20 Phasenstufen in Form von Perioden vorsehen, wobei die Änderung der Richtung der Phasenverschiebung jeweils die jeweilige Gruppe von Perioden markiert. Zusätzlich kann man noch eine Amplitudencodierung verwenden.Will man eine Nachricht verschlüsseln, so kann man z.B. 50 Perioden vorsehen, die in der Summe einen vorbestimmten Phasensprung ausmachen. Eine voreilende Phasenverschiebung bedeutet z.B. den Binärwert "1" und eine nacheilende den Binärwert "0". Liegt gegenüber dem vorhergehenden Wert keine Phasenverschiebung vor, so haben die 50 Perioden denselben Binärwert wie die vorherigen 50 Perioden. Zur Täuschung kann man innerhalb der jeweiligen 50 Perioden Amplitudenstufen und auch Phasensprünge vorsehen, die jede Richtung und Grösse einnehmen können, wobei sich jedoch der vorbestimmte Gesamtphasensprung nicht ändert. Man kann also die 5,10, 15 usw. Phasenstufen in Form von Periodendauern nicht nur gleichmässig verändern, sondern noch innerhalb der Gruppen verschiedene Phasengruppen in Form von verschieden grossen Periodendauern vorsehen. Man kann also den jeweiligen Gesamtphasensprung aus 2 oder einer Vielzahl gleicher oder ungleicher voreilender und/oder nacheilender Einzelphasensprungstufen bilden. Dem Codeelement können eine Vielzahl von Stufen zugeordnet werden, z. B. die Zahl der Perioden, eine voreilende, nacheilende Phasenverschiebung oder keine Änderung der Phase, 2 oder mehrere Amplitudenstufen.

Die Dämpfungsglieder Wi1,..Wi11 in den beiden Wechselstromkreisen der Fig. 11 können auch in Serie geschaltet werden und die elektrische Veränderung durch Kurzschluss in vorbestimmter Folge zustande gebracht werden.

Die Auswertung auf dem Prinzip der Abmessung der Halb- bezw. Periodendauer kann nicht nur auf das Prinzip der Codierung auf der Basis der Addition zweier um 90 Grad phasenverschobener Wechselströme gleicher Frequenz durch Veränderung der elektrischen Verhältnisse erfolgen, sondern auch bei anderen Verfahren wie z.B. Phasenmodulation als Frequenzmodulation mit frequenzabhängiger Modulationsspannung oder bei der Erzeugung durch nachgeschaltete Phasenschieber.

Natürlich kann das Prinzip der Codierung mit der Phase gemäss der vorliegenden Erfindung auch beim Pulsphasenmodulations-Multiplexbetrieb verwendet werden und zwar sowohl beim Phasensprung- als auch beim Summenphasensprungverfahren. Eine oder mehrere Perioden des Codierungswechselstromes werden dann seriell einem Kanal zugeordnet und entsprechend dem zugehörigen Quantisierungsintervall analog oder digital phasenverschoben. U.U. ist dabei eine Zwischenspeicherung der Werte der Quantisierungsintervalle erforderlich evtl. auch bei der Auswertestelle. Ein besonderer Synchronisierkanal ist nicht erforderlich. Die Synchronisierung kann z.B. durch Amplitudenerhöhung einer Periode, die gerade die Normallage besitzt, durchgeführt werden.

In Fig.21 ist ein Codierwechselstrom dargestellt. Da die Dauer der Halbperiode bezw. Periode verschieden gross sein können (Fig.21, 0,01,02,03), muss bei der Übertragung nach dem Prinzip der Fig.33 jeder Nulldurchgang ermittelt werden und dann eine Umschaltung auf die Halbperiode oder Periode des entsprechenden Kanals erfolgen.U.U. muss dann vor der Phasencodierung eine Zwischenspeicherung des jeweiligen Wertes vorgenommen werden. Bei der analogen Amplitudencodierung kann man 2 oder mehrere Amplituden von Halbwellen bezw. Perioden hernehmen.

Durch Summierung kann man dann die Gesamtamplitude erhalten.

**Patentansprüche**

1. Verfahren zur Erzeugung eines Sendesignals zur Verwendung insbesondere bei der Phasensprungtastung, bei der Pulsphasen - Pulsdauer-Pulsfrequenz- und Winkelmodulation, dadurch gekennzeichnet, dass die Übertragungssicherheit erhöht und die Bandbreite in der Weise verkleinert wird, indem der jeweils einem Signalwert zugeordnete Phasensprung durch mehrere oder eine Vielzahl von Phasensprungstufen gebildet wird, die Phasensprungstufen werden dabei so auf mehrere aneinandergereihte Halbwellen verteilt, dass eine ununterbrochene Folge entsteht (Fig.17,Fig.24), als Mass für die Phasenlage wird dabei die positive oder negative Differenz der Summe der Halbperioden- bzw. Periodendauern (Fig.17a,b 90$^\circ$, Fig.24,Jd3) zu den entsprechenden Bezugsphasen bezw. Bezugshalbperioden, bezw. Periodendauern oder der Unterschied der Phasenlage, also der Halb- bezw. Periodendauern zur Periodendauer des vorhergehenden Phasensprunges oder bei einer Frequenzmodulation, der grösste und/oder kleinste Absolutphasenwert der zu einer Signalhalbwelle gehörenden frequenzmodulierten Halbwellen (Fig.29 TrM/2, Fig.30, T/2) hergenommen.

2. Verfahren zur Erzeugen von Phasensprüngen nach Anspruch 1 mit Hilfe zweier um 90$^\circ$ phasenverschobener sinusförmiger Wechselströme (FIG.1), dadurch gekennzeichnet, dass zur Vermeidung von Amplitudenänderungen bei der Erzeugung beliebiger Phasenänderungen beim Summenwechselstrom eine solche gleichzeitige Änderung beider die Phasenwinkel bestimmenden Vektoren vorgenommen wird, dass die Summenamplitude immer dieselbe Grösse erhält (Fig.3. Fig.6).

3. Schaltungsanordnung zur stufenweisen Veränderung der Phase mittels des Verfahrens nach Anspruch 1, insbesondere für die Phasensprungtastung, Pulsphasen-Pulsdauer-Pulsfrequenz-und Winkelmodulation, dadurch gekennzeichnet, dass mehrere oder eine Vielzahl von Sinus- und Cosinuswechselstromkreise vorgesehen sind (Fig. 11, Wi1 bis Win, Wi11 bis Wi11n) mit in den jeweiligen Stromkreisen mehreren oder eine Vielzahl von Mitteln (Widerstände, Verstärker), die zu einer solchen Veränderung der elektrischen Verhältnisse dieser Stromkreise führen, dass die vorbestimmte Phasenänderung zustandekommt, für die Einschaltesteuerung dieser Mittel ist ein Codierer vorgesehen (Fig.11,Cod), der in Abhängigkeit vom Code (Fig.11, Code) zur Wirkung kommt, weiterhin ist für die phasengerechte Steuerung ein Abgriff des Summenwechselstromes vorgesehen mit Mitteln (Fig.11, B) zur An-Aus- und Umschaltung beim Nulldurchgang.

4. Verfahren nach den Ansprüchen 1 und 2, dadurch gekennzeichnet, dass bei der Erzeugung der Phasensprünge durch 2 um 90$^\circ$ phasenverschobene Wechselströme die Phasenänderung beim Nulldurchgang des Sendesignals oder bei einem der beiden um 90$^\circ$ phasenverschobenen Teilsignale erfolgt (Fig.11,B,Js), wobei solche Mittel zur Phasenänderung vorgesehen werden, dass zugleich abhängig vom Code eine Änderung der Amplitudengrösse erfolgt (Fig.4) und dass bei Bedarf der Beginn bezw. das Ende einer Phasensprungserie durch eine Amplitudenänderung markiert wird.

5. Verfahren nach Anspruch 1, dadurch gekennzeichnet, dass die durch verschieden grosse Periodendauern gekennzeichnete Phasenlage und/oder Amplitudengrösse der Halbwellen bezw. Perioden oder Rechteckimpulscodeelemente 2er Informationskanäle in der Weise über einen Kanal übertragen werden, indem den Codeelementen eine solche unterschiedliche Amplitudengrösse zugeordnet wird, ggf. unter Zwischenspeicherung derselben, dass bei einer frequenzmodulierten Übertragung in der Empfangsstelle ein auswertbarer Frequenzabstand zustandekommt (Fig.24,29,30,31,32).

6. Verfahren nach den Ansprüchen 1,2,4 und 5, dadurch gekennzeichnet, dass eine Verschlüsselung von Information in der Weise erfolgt, indem der Jeweilige Phasensprung in mehrere oder eine Vielzahl von Phasensprungstufen unterteilt wird, wobei diese in einem Phasensprung vor- und nacheilende Werte annehmen können, während der Phasensprung selbst einen vorbestimmten vor- oder nacheilenden Phasensprungwert zugeordnet erhält, wobei bedarfsweise zusätzlich eine Amplituden bezw. Scheinamplitudencodierung vorgesehen wird.

7. Verfahren für die Decodierung von Phasenlagen eines sinusähnlichen Übertragungssignal, die mit Hilfe von Halb-bezw. Perioden von Wechselspannungen gemäß Anspruch 1 (Fig.17,24,31,32) codiert wurden, dadurch gekennzeichnet, dass als Mass der Phasenlage bezw. Phasenänderung die Halb- bezw. Periodendauer als Absolut- oder Bezugswert hergenommen wird, die in der Weise ausgewertet
wird, indem mit Hilfe eines Mess- bezw. Zählgliedes , das mit einer gegenüber der kleinsten
vorkommenden Codierfrequenz der Halb-
bezw. Perioden vielfachen Frequenz gesteuert
wird, die Halb- bezw. Periodendauer gemessen
wird, wobei die Messimpulse mit dem Beginn
der jeweiligen Halb-bezw.Periode an das
Mess- bezw. Zählglied angeschaltet werden
und am Ende derselben wieder abgeschaltet
werden, der am Ende der Halb- bezw. Periode
erreichte Ausgang am Mess- bezw. Zählglied
ist ein Mass für die relative bezw. absolute
Phasenlage (Fig.15,Phv,Jn,Phn), wobei bei Bedarf den Halb- bezw. Periodendauern bei der
Abmessung Toleranzen in der Zahl der Messimpulse zugeordnet werden.

8. Schaltungsanordnung zur Decodierung von
Phasenlagen eines sinusähnlichen Übertragungssignals, die mit Hilfe von Halb- bezw.
Perioden von Wechselspannungen gemäß Anspruch 1 codiert wurden, dadurch gekennzeichnet, dass ein Zählglied vorgesehen ist,
mit einer vielfachen Zahl von Ausgängen gegenüber der Frequenz der Codierhalbwellen
bezw. Perioden, weiterhin ist ein Erzeuger von
Messimpulsen vorgesehen (Fig.15,Jm) und
Mittel (Fig.12) zur Aufbereitung der Information
für die Steuerung, eine Gatteranordnung sorgt
dabei, dass nur während der zu messenden
Halb- bezw. Periode eine Steuerung des Messgliedes erfolgt, in den Ausgängen des Zählgliedes sind ausserdem Mittel angeordnet
(Fig.15,Phv,G3,G4,B1) zur Anzeige der Stellung des Zählgliedes nach dem Ende der
Halb- bezw. Periodendauer, wobei bei Phasenstufen die Auswertung durch Summierung der
Periodendauern der Phasensprungstufen erfolgt, und dass bei Bedarf den Halb- bezw.
Periodendauern bei der Abmessung Toleranzen in der Zahl der Messimpulse zugeordnet
werden.

9. Verfahren zur Erzeugung eines Sendesignals
für eine Stufenweise Phasencodierung nach
Anspruch 1, dadurch gekennzeichnet, dass die
Periodendauern von Halb- bezw. Perioden einer Wechselspannung, die in einer ununterbrochenen Folge gesendet werden, insbesondere
Rechteckimpulse (Fig.24,22,26,31) so verändert werden, dass die jeweilige Periodendauer
zu einer Bezugsperiodendauer bezw. Bezugsphase, Differenzphase oder Absolutphase ein
Phasenmass bezw. einen Phasensprung darstellt.

10. Verfahren nach den Ansprüchen 1, 7 und 8,
dadurch gekennzeichnet, dass die Information
wie das Luminanzsignal beim Fernsehen
(Fig.37) oder Ton-Sprachsignale pulsamplitudenmoduliert werden, wobei bei Bedarf mehrere Kanäle zeitmultiplex zusammengefasst werden (Fig.36), und auf die Amplituden von Halbwellen bezw. Perioden oder Rechteckimpulsen
(Fig.22,23) einer Frequenz übertragen und in
einer ununterbrochenen Folge aneinandergereiht und für die Übertragung frequenzmoduliert werden.

## Claims

1. Method of generating a transmitted signal for
use in particular in phase-shift modulation in
pulse-phase, pulse-width, pulse frequency and
angle modulation, characterised in that the security of transmission is increased and the
bandwidth reduced in the manner that the
phase shift associated with a respective signal
value is formed by several or a number of
phase-shift stages, the phase-shift stages are
distributed on a number of successive half-
waves in such a manner that an uninterrupted
sequence arises (Fig 17,Fig 24), as a measure
of the phase position in this arrangement the
positive or negative difference of the sum of
the half-cycle or cycle durations (Fig 17a,b
$90°$,Fig 24Jd3) are derived in relation to the
corresponding reference phases or reference
half-cycles or cycle durations or the difference
of the phase position, therefore the half-cycle
or cycle duration to the cycle duration of the
preceding phase shift or with frequency modulation the greatest and/or smallest absolute
phase value of the frequency-modulated half
wave associated with a signal half wave (Fig
29,TrM/2,Fig 30,T/2).

2. Method of producing phase shifts according to
claim 1 with the aid of two sinusoidal alternating currents with a $90°$ phase displacement
(Fig 1), characterised in that, to avoid changes
in amplitude in the production of any desired
phase alterations in the added alternating current, a simultaneous alteration of the two vectors determining the phase angle is undertaken
such that the sum amplitude always has the
same magnitude (Fig 3,Fig 6).

3. Circuit arrangement for the step-wise alteration
of phase by means of the method according to
claim 1, in particular for phase-shift keying,
pulse-phase, pulse-duration, pulse-frequency
and angle modulation, characterised in that
several or a number of sine and cosine alternating current circuits are provided (Fig 11, Wi1 to Win, Wi11 to Wi11n) with in the respective circuits several or a number of means (resistors, amplifiers), which lead to such a change in the electrical relationships of these circuits that the predetermined phase alteration takes place, for controlling the switching-in of these means a coding arrangement is provided (Fig 11, Cod), which comes into action in accordance with the code (Fig 11, Code), furthermore for control in the correct phase a pick-off of the sum alternating current is provided with means for on-off and change-over switching on passage through zero.

4. Method according to Claim 1 and 2 characterised in that for producing the phase shifts through two alternating currents having a $90°$ phase difference the phase change on passage through zero of the transmitter signal or in one of the two $90°$ -phase -shifted part signals takes place (Fig 11,B,Js), such means being provided for phase alteration that at the same time dependent on the code an alteration of the amplitude takes place (Fig 4) and that as required the beginning and the end of a series of phase shifts is marked by an alteration in amplitude.

5. Method according to Claim 1 characterised in that the phase positions characterised by period durations of different magnitude and/or amplitude magnitudes of the half-waves or cycles or rectangular pulse code elements are transmitted to second information channels in a manner through a channel such that the code elements have such a differing amplitude magnitude associated with them, if necessary with intermediate storage of the latter, that in a frequency-modulated transmission a frequency displacement which can be evaluated comes into existence at the receiver (Fig 24,29,30,31,32).

6. Method according to Claims 1,2,4 and 5 characterised in that a coding or scrambling of information takes place in the manner that the respective phase displacement is split up into several or a number of phase-shift stages, and these can take up advanced and delayed values in one phase shift, whilst the phase shift itself receives an associated predetermined advanced or delayed phase jump value, and if necessary additionally an amplitude or apparent amplitude coding is provided.

7. Method for decoding phase positions of a sinusoidal transmitted signal which had been coded with the aid of half-cycles or cycles of alternating voltages according to Claim 1 (Fig 17,24,31,32) characterised in that as a measure of the phase position or phase alteration the half-cycle or cycle duration is derived as an absolute or reference value, which is evaluated in a manner such that with the aid of a measuring of counting device which is controlled at a frequency which is a multiple of the smallest arising coding frequency of the half-cycles or cycles, the half-cycle or cycle duration is measured, the measured pulse being connected to the measuring or counting device at the start of the relevant half-cycle or cycle and being switched off again at the end of it, the output at the measuring or counting device achieved at the end of the half-cycle or cycle being a measure of the relative or absolute phase position (Fig 15,Phv,Jn,Phn), if necessary the half-cycle or cycle duration having associated with it tolerances in the number of measuring pulses in the measurement.

8. Circuit arrangement for decoding phase positions of a sinusoidal transmitted signal which has been coded with the aid of half-cycles or cycles of alternating voltages according to claim 1, characterised in that a counter device is provided, with a number of outputs which is a multiple with respect to the frequency of the coding half-waves or cycles, furthermore there is provided a generator of measuring pulses (Fig 15,Jm) and means (Fig 12) for handling the information for the control, a gate arrangement ensures that only during the half-cycles or cycles to be measured a control of the measuring member takes place, furthermore in the outputs of the counting device means are arranged (Fig 15,Phv,G3,G4,B1) for displaying the position of the counting device after the end of the half-cycle or cycle duration, the evaluation taking place in phase steps by summing the cycle durations of the phase shift steps, and that if necessary the half-cycle or cycle durations have associated with them in the measurement tolerances in the number of counting pulses.

9. Method of producing a transmitted signal for step-wise phase coding according to Claim 1, characterised in that the cycle durations of half-cycles or cycles of an alternating voltage which are transmitted in an uninterrupted sequence, in particular rectangular pulses (Fig 24,22,26,31) are so altered that the respective cycle duration represents to a reference cycle duration or reference phase, difference phase, or absolute phase a measure of the phase or a phase shift.

10. Method according to Claims 1,7 and 8 characterised in that the information such as the luminance signal in television (Fig 37) or tone speech signals are pulse-amplitude modulated, if necessary several channels being combined by time-multiplexing (Fig 36), and to the amplitudes of half-waves or cycles or rectangular pulses (Fig 22,23) a frequency is applied and arranged in an uninterrupted sequence one after another and frequency-modulated for transmission.

**Revendications**

1. Procédé de production d'un signal d'émission, destiné en particulier lors de l'exploration des sauts de phase, à la modulation par phase d'impulsion, par durée d'impulsion, par fréquence d'impulsion et la modulation angulaire, caractérisé en ce que la sécurité de la transmission est accrue et la largeur de bande diminuée du fait qu'un saut de phase, chaque fois associé à une valeur de signal, est formé par plusieurs ou par une pluralité de niveaux de saints de phase, les niveaux de sauts de phase étant répartis sur plusieurs demi-ondes successives, de telle façon qu'est produite une suite ininterrompue (figure 17, figure 24), en prenant comme valeur de la position en phase la différence positive ou négative de la somme des demi-périodes - ou des durées de périodes (figure 17ab 90°, figure 24, Jd3) aux phases de référence, ou demi-périodes de référence, respectivement durées de période correspondantes, ou la différence de position en phase, donc entre les durées de demi-périodes, ou de périodes, et la durée de période du saut de phase précédent, ou, dans le cas d'une modulation de fréquence, le maximum et/ou le minimum de la valeur de phase absolue des demi-ondes modulées en fréquence appartenant à une demi-onde de signal (figure 29, TrM/2, figure 30, T/2).

2. Procédé de production de changements brusques de phase selon la revendication 1, à l'aide de deux courants alternatifs sinusoïdaux décalés de 90° en phase (figure 1), caractérisé en ce que, pour éviter les variations d'amplitude lors de la production de variations de phase voulues quelconques, en effectue sur le courant alternatif sommé une modification simultanée des deux vecteurs déterminant l'angle de phase, telle que l'amplitude de somme est toujours de la même ampleur (figure 3, figure 6).

3. Circuit pour produire par niveaux une modification de phase, au moyen du procédé selon la revendication 1, en particulier lors de l'exploration des sauts de phase, pour la modulation par phase d'impulsion, par durée d'impulsion, par fréquence d'impulsion et modulation angulaire, caractérisé en ce que plusieurs ou une pluralité de circuit électriques à courant alternatif sinusoïdal ou cosinusoïdal sont prévus (figure 11, Wi1 à Win, Wi11 à Winn) avec, dans les différents circuits électriques, plusieurs ou une pluralité de moyens (résistances, amplificateurs), aboutissant à une variation des conditions électriques de ces circuits électriques, telle qu'on réalise la variation de phase prédéterminée, un codeur (figure 11, Cod) étant prévu pour assurer la commande de connexion de ces moyens et est mis en action en fonction du code (figure 11, corde), un prélèvement du courant alternatif sommé tant de plus prévu pour assurer la commande en phase, avec des moyens (figure 11, B) pour assurer la connexion, déconnexion et la commutation, lors du passage à zéro.

4. Procédé selon les revendications 1 et 2, caractérisé en ce que, lors de la production des sauts de phase au moyen de 2 courants alternatifs décalés en phase de 90°, la variation de phase s'effectue lors du passage à zéro du signal de transmission ou lors de l'un des deux signaux partiels décalés en phase de 90° (figure 11,B,Js), où, pour assurer la variation de phase, sont prévus des moyens tels qu'une variation de la valeur de l'amplitude s'effectue en même temps, en fonction du code (figure 4) et qu'en cas de besoin, le début, respectivement la fin d'une série de sauts de phase est marquée par une variation d'amplitude.

5. Procédé selon la revendication 1, caractérisé en ce que la position de phase qui est caractérisée par des durées de périodes de valeurs différentes et/ou la valeur de l'amplitude des demi-ondes, respectivement les périodes des éléments de codage d'impulsion rectangulaire de deuxièmes canaux d'information, sont transmises par un canal, de telle manière qu'aux éléments de code soit associée une telle valeur différente d'amplitude, le cas échéant avec un stockage intermédiaire de celle-ci, que, lors d'une transmission à modulation de fréquence, un espacement de fréquence exploitable est réalisé au point de réception (figures 24,29,30,31,32).

6. Procédé selon les revendications 1,2,4 et 5, caractérisé en ce qu'un codage de l'information s'effectue en subdivisant chaque saut de phase en plusieurs ou une pluralité de niveaux de sauts de phase, qui peuvent prendre dans un saut de phase des valeurs d'avancement ou de retardement de phase, tandis que le saut de phase même et reçoit une valeur associée de saut de phase prédéterminée, produisant une avance ou un retard de phase, un codage en amplitude, respectivement en amplitude apparente étant prévu en plus en cas de besoin.

7. Procédé pour le décodage de positions de phase d'un signal de transmission supplémentaire, les positions en phase ayant été codées à l'aide de demi-périodes ou de périodes de tension alternatives selon la revendication 1 (figures 17,24,31,32), caractérisé en ce que l'on prend pour valeur de la position en phase, ou de la variation de phase, comme valeur absolue ou valeur de référence, la durée de demi-période, ou de période, qui est exploitée de manière qu'à l'aide d'un organe de mesure, ou de comptage, ayant été commandée à l'aide d'une fréquence qui est un multiple par rapport aux fréquences de codage les plus basses des demi-périodes, ou des périodes, on mesure la durée de demi-période, ou de période, les impulsions de mesure étant connectées à l'organe de mesure, ou de comptage, au début de la demi-période ou période respective et redéconnnectées à leur achèvement, le signal de sortie obtenu à la fin de la demi-période, ou période, sur l'organe de mesure, ou de comptage, étant une valeur de la position en phase relative, ou absolue (figure 15, Phv, Jn, Phn), des tolérances dans le nombre des impulsions de mesure étant affectées aux durées de demi-période, ou de période, lors de la mesure, en cas de besoin.

8. Circuit pour le décodage de la position en phase d'un signal de transmission sinusoïdal, ayant été codé à l'aide de demi-périodes, ou de périodes de tension alternatives, selon la revendication 1, caractérisé en ce qu'est prévu un organe de comptage avec un nombre de signaux de sortie multiple de la fréquence des demi-ondes, ou périodes de codage, étant en plus prévu un générateur d'impulsions de mesure (figure 15,Jn) et des moyens (figure 12) pour traiter l'information pour la commande, un dispositif de porte veillant à ce que la commande de l'organe de mesure ne s'effectue que pendant une demi-période ou une période à mesurer, des moyens (figure 15, Phv, G3,G4,B1) étant en outre prévus dans les sorties de l'organe de comptage, pour indiquer la position de l'organe de comptage après achèvement de la durée de demi-période, ou de période, où, en cas de niveaux de phase, l'exploitation s'effectuant par sommation des durées de période des étages à sauts de phase, et des tolérances dans le nombre des impulsions de mesure étant affectées aux durées de demi-période, ou de période, lors de la mesure, en cas de besoin.

9. Procédé de production d'un signal émetteur pour un codage graduel en phase, selon la revendication 1, caractérisé en ce que les durées de période des demi-périodes, ou des périodes d'une tension alternative, ayant été envoyées en une suite ininterrompue, en particulier des impulsions rectangulaires (figures 24,22,26,31), sont modifiées de telle façon que la durée de période respective représente une mesure de la phase, ou du saut de phase, correspondant à une durée de période de référence, ou une phase de référence, une différence de phase ou une phase absolue.

10. Procédé selon les revendications 1, 7 et 8, caractérisé en ce que l'information, telle que le signal de luminance pour de la télévision (figure 37) ou les signaux audios, sont soumis à une modulation d'amplitude des impulsion, où, en cas de besoin, plusieurs canaux sont groupés en multiplex (figure 36), et transmises aux amplitudes des demi-ondes, ou des périodes ou des impulsions rectangulaires (figure 22,23) d'une fréquence et ordonnées entre elles en groupe en formant une suite ininterrompue et modulées en fréquence pour la transmission.

Fig.1, Fig.2, Fig.3, Fig.4, Fig.5, Fig.6, Fig.7, Fig.8, Fig.9, Fig.10

Fig.11

Fig.12

Fig. 13

Fig. 15

Fig.14

Fig. 27

Fig. 22

Fig. 26

Fig. 23

Fig. 25

Fig. 24

Fig. 20

18

Fig. 28

Fig. 17

Fig. 21

Fig. 29

Fig. 18a

Fig. 18b

Fig. 30

Fig. 31

Fig. 33

Fig. 35

Fig. 32

Fig. 34

Fig. 36a

Fig. 36b

Fig. 19

*Fig. 16*

FIG. 37a

FIG. 37b

FIG. 37c